# FASCICULE DE BREVET EUROPEEN

(11) **EP 3 318 355 B1**
(45) Date de publication et mention de la délivrance du brevet: **03.07.2019**
(21) Numéro de dépôt: 17196891.0
(22) Date de dépôt: 17.10.2017
(51) Int. Cl.: B23C 5/10

(54) **FRAISE POUR PERCAGE ORBITAL**
FRÄSER ZUM ORBITALBOHREN
MILLING TOOL FOR ORBITAL DRILLING

(30) Priorité: 04.11.2016 FR 1660693
(43) Date de publication de la demande: 09.05.2018
(73) Titulaire: PRECISE France, 74250 Peillonnex (FR); HAM France, 74250 Peillonnex (FR); Carbilly, 74800 Saint-Pierre-en-Faucigny (FR)
(72) Inventeur: AUFFRET, Alain, 74250 PEILLONNEX (FR); BONNET, Patrick, 74570 EVIRES (FR)
(74) Mandataire: Nony

(56) Documents cités:
- DE-A1-102006 053 330
- DE-A1-102014 213 750
- JP-A- 2000 246 728
- JP-A- 2003 225 821
- US-A1- 2007 196 191
- US-A1- 2008 047 320
- US-A1- 2010 056 025

## Description

### Domaine technique

La présente invention concerne le domaine du perçage orbital de pièces de matériaux divers et variés, au moyen d'une fraise selon le préambule de la revendication 1. Un exemple d'une telle fraise est divulgué dans le DE 10 2014 213 750 A1.

Elle a trait plus particulièrement à une nouvelle conception de fraise pour ce type d'usinage.

Les applications industrielles concernées par l'invention, sont nombreuses.

Parmi celles-ci, dans le domaine de l'aéronautique, il peut s'agir de perçages spécifiques destinés à des fixations, comme des perçages à l'emplanture d'une voilure d'un nouvel avion, dans sa liaison avec le fuselage, ou encore des perçages de profilés constituant un cadre de fuselage. Les perçages à réaliser doivent être cylindriques et/ou coniques, dans des épaisseurs importantes de matériaux et/ou dans des empilements multi-matériaux, typiquement un empilement tri-couches de carbone/titane/aluminium.

### Art antérieur

Le perçage orbital est une opération de perçage par fraisage selon laquelle le centre d'une fraise décrit une orbite autour du centre du trou à réaliser tout en tournant sur son axe propre et se déplace dans la direction axiale.

L'outil mis en oeuvre pour un perçage orbital comprend tout d'abord un support de fraise destiné à être entraîné en rotation autour d'un premier axe de rotation destiné à être confondu avec l'axe du trou.

Une fraise est montée rotative sur le support de fraise. L'axe central de la fraise forme un deuxième axe de rotation parallèle au premier axe de rotation et espacé de celui-ci d'une distance d'espacement non nulle. La fraise est destinée à être entraînée en rotation autour du deuxième axe de rotation par rapport au support de fraise pour percer le trou.

Par rapport à un outil classique où la tête de coupe est constituée d'un forêt coaxial au trou à percer, un outil de perçage orbital permet de diminuer le couple d'entraînement en rotation de la tête de coupe et l'effort axial de pénétration de tête de coupe dans la pièce à percer.

Le perçage orbital est déjà bien répandu dans le domaine aéronautique et a fourni de très bons résultats pour des trous de large diamètre dans des pièces constituées d'empilements tri-couches de type fibres de carbone/titane/aluminium.

Ainsi les avantages majeurs pour ce type d'usinage sont nombreux parmi lesquels l'absence de bavures, la réduction du nombre de forêts de diamètre différent, une plus grande reproductibilité, l'absence de nécessité d'un liquide de refroidissement et la diminution des efforts de coupe.

Des études récentes ont mis en exergue qu'il sera délicat d'obtenir les mêmes avantages pour le perçage orbital dans des pièces en aluminium que ceux obtenus dans des pièces en titane et en fibres de carbone.

En particulier, comme évoqué ci-dessus, le perçage orbital connu permet d'appliquer un effort de coupe moindre mais mieux maîtrisé sur les surfaces à percer, ce qui génère des contraintes résiduelles moindres que celles obtenues dans un procédé de perçage classique par forêt ou dans un procédé de fraisage connu.

Or, cela est un véritable problème pour le perçage d'une pièce en aluminium dans laquelle des contraintes résiduelles vont influencer de manière importante son comportement en fatigue.

Il existe donc un besoin de proposer une nouvelle solution de perçage orbital, notamment afin d'augmenter les contraintes résiduelles dans les pièces percées, plus particulièrement dans celles contenant de l'aluminium.

Le but de l'invention est de répondre au moins en partie à ce besoin.

### Exposé de l'invention

Pour ce faire, l'invention concerne une fraise selon la revendication 1 pour perçage orbital, constituée d'un corps de révolution autour d'un axe comprenant une partie proximale formant une queue, une partie distale formant une tête de coupe comprenant au moins un étage avec des dents de coupe définissant un diamètre de perçage, et une partie lisse de jonction entre la queue et la tête de coupe, la partie lisse de jonction comprenant un renflement annulaire de diamètre supérieur au diamètre de perçage, de sorte à réaliser un galetage de l'orifice percé lors de l'avancée de la fraise.

Ainsi, l'invention consiste essentiellement à réaliser sur une fraise, un renflement ou autrement dit une saillie annulaire qui va permettre juste après le perçage de l'orifice par les dents de coupe de venir galeter, c'est-à-dire écraser la matière périphérique bordant l'orifice, ce qui va provoquer une mise sous contrainte et un écrouissage importants de cette matière sur un diamètre supérieur à celui de l'orifice percé.

Avec un état écroui localement autour du trou percé, les contraintes résiduelles sont fortement augmentées.

Ainsi, la fraise selon l'invention présente deux fonctions complémentaires, l'une classique de coupe pour le perçage orbital et l'autre de galetage pour induire un écrouissage local autour du trou percé. Cela est particulièrement avantageux pour le perçage orbital de l'aluminium qui est écroui simultanément.

De manière surprenante, bien que simple à réaliser, personne n'avait pensé jusqu'à présent à implanter sur une même pièce à la fois une fraise en tant qu'outil d'enlèvement de matière et un moyen de galetage.

En effet, jusqu'à présent, lorsqu'on souhaite réaliser un galetage d'un orifice, celui-ci est fait dans un alésage au moyen d'un outil dédié qui est désigné usuellement par l'appellation « brunissoir à galets ».

Or, les inventeurs ont analysé que dans le cadre d'un perçage orbital, il n'était pas envisageable de mettre en oeuvre deux outils successivement, à savoir une fraise pour le perçage puis un outil de galetage.

En effet, avec ces deux outils successifs, le diamètre souhaité ne peut être obtenu au final et la précision baisse fortement. En outre, il est loin d'être certain d'obtenir le niveau d'écrouissage recherché.

Selon un mode de réalisation avantageux, le renflement annulaire comprend une portion cylindrique définissant le diamètre de renflement (Dr), prolongée du côté de la tête de coupe par un premier arc de raccordement de rayon de courbure R1, et du côté de la queue par un deuxième arc de raccordement de rayon de courbure R2. De préférence, le rayon de courbure R1 est égal au rayon de courbure R2.

Avantageusement, la différence entre le diamètre de perçage (Dc1) et le diamètre de renflement (Dr) est comprise entre 1 et 12 µm. Avec cette gamme préférée, on peut ainsi obtenir des niveaux d'écrouissage satisfaisants dans tout type d'aluminium que l'on cherche à galeter.

Selon une variante avantageuse, la tête de coupe comprend deux étages dont un premier étage présentant le plus grand diamètre qui est le diamètre de perçage nominal (Dc1), prolongé d'un deuxième étage de moindre diamètre de coupe (Dc2) que le premier étage. De préférence, la différence entre le diamètre de perçage nominal (Dc1) et le moindre diamètre de coupe (Dc2) est comprise entre 1 et 6 mm.

De préférence encore, chaque étage de coupe comprenant un nombre de quatre dents agencées en hélice autour de l'axe X ou droites, de préférence réparties uniformément à 90° ou les unes des autres. L'hélice peut être une hélice vers la droite, d'angle compris entre -20 et 45°.

Avantageusement, les hélices de l'étage de diamètre de perçage et de l'étage de moindre diamètre peuvent être concentriques, avec des points de départ et d'arrivée alignés de manière par rapport à l'axe X, de sorte que les dents de coupe des deux étages sont coplanaires individuellement les unes avec les autres, parallèlement à l'axe X.

Selon une caractéristique avantageuse, la fraise peut comprendre un trou central traversant de part en part la fraise, le trou étant destiné à alimenter en liquide ou en gaz de lubrification la tête de coupe depuis la queue.

Selon une variante avantageuse, la fraise peut comprendre, entre le renflement annulaire et la queue, une partie de coupe arrière, élargie par rapport à la tête de coupe et au renflement, la partie de coupe arrière étant adaptée pour réaliser un perçage élargi par rapport à l'orifice percé au diamètre de perçage nominale de sorte à loger une tête de rivet lorsque le perçage nominal est destiné à loger la tige d'un rivet. De préférence, la partie arrière de coupe comprend un cône d'élargissement par rapport au diamètre de perçage nominal et des dents agencées sur le cône en hélice autour de l'axe X ou droites, de préférence réparties uniformément autour de l'axe X, les dents étant de préférence réalisées en partie sur la partie de jonction.

La fraise peut présenter un diamètre de perçage nominal (Dc, Dc1) compris entre 2 et 30 mm.

L'invention a également pour objet l'utilisation définie à la revendication 14 de la fraise qui vient d'être décrite pour réaliser un perçage orbital d'un orifice.

Une utilisation avantageuse est celle dans laquelle la rotation de la fraise sur son axe de révolution (X) est comprise entre 50000 et 60000 tr/min tandis que la rotation de la fraise autour de l'axe orbital est comprise entre 200 et 2000 tr/min.

L'utilisation peut être prévue pour le perçage orbital de pièces destinées à constituer une partie d'une structure d'avion, notamment des profilés de cadres de fuselage d'avion.

Les pièces à percer peuvent être en partie en aluminium, typiquement dans un empilement aluminium/carbone/titane.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

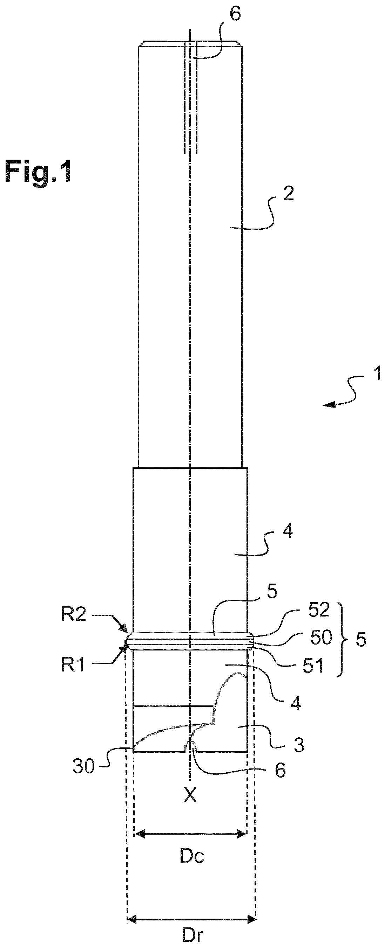

- la figure 1 est une vue de côté d'un premier exemple de fraise pour perçage orbital selon l'invention;
- la figure 2 est une vue de côté d'un deuxième exemple de fraise pour perçage orbital selon l'invention;
- la figure 3 est une vue de détail en perspective de la tête de coupe de la fraise selon la figure 2.

On précise ici dans l'ensemble de la présente demande, les termes « distal » et « proximal » sont utilisés par référence à la fraise dans sa configuration montée sur un outil de perçage orbital afin de percer une pièce. Ainsi, la partie distale de la fraise est constituée par la tête de coupe qui va réaliser le perçage de l'orifice.

La fraise selon l'invention, globalement désignée par la référence 1 est destinée à réaliser le perçage orbital d'une pièce.

Dans ce type d'usinage, la rotation de la fraise 1 sur son axe de révolution (X) est avantageusement comprise entre 50000 et 60000 tr/min tandis que la rotation de la fraise 1 autour de l'axe orbital est de préférence comprise entre 200 et 2000 tr/min.

Dans le mode de réalisation illustré, la fraise 1 est monobloc et constituée d'un corps de révolution autour d'un axe (X).

Le corps comprend tout d'abord une partie proximale formant une queue 2. Cette queue 2 est la partie de préhension de la fraise pour le montage dans le support d'outil de perçage.

A l'autre extrémité, la fraise 1 comprend une partie distale formant une tête de coupe 3 comprenant au moins un étage avec des dents de coupe 30 définissant un diamètre de perçage (Dc).

Une partie lisse de jonction 4 est prévue entre la queue 2 et la tête de coupe 3.

Selon l'invention, la partie lisse de jonction 4 comprend un renflement annulaire 5 dont le diamètre Dr est supérieur au diamètre de perçage nominal Dc, de sorte à réaliser un galetage de l'orifice percé lors de l'avancée de la fraise.

La fraise 1 monobloc selon l'invention peut être entièrement réalisée en carbure, cermet ou encore en céramique. On peut aussi avoir une queue 2 en acier avec une tête de coupe 3 en diamant ou revêtue de diamant.

Dans les exemples illustrés, le renflement annulaire 5 est constitué d'une portion cylindrique 50 définissant le diamètre de renflement (Dr), prolongée du côté de la tête de coupe 3 par un premier arc de raccordement 51 de rayon de courbure R1, et du côté de la queue 2 par un deuxième arc de raccordement 52 de rayon de courbure R2. De préférence, le renflement 5 est symétrique. Ainsi, le rayon de courbure R1 est égal au rayon de courbure R2.

On peut prévoir de munir la fraise 1 d'un trou central 6 traversant de part en part la fraise. Ce trou 6 permet ainsi d'alimenter en liquide ou en gaz de lubrification la tête de coupe 3 depuis la queue 2.

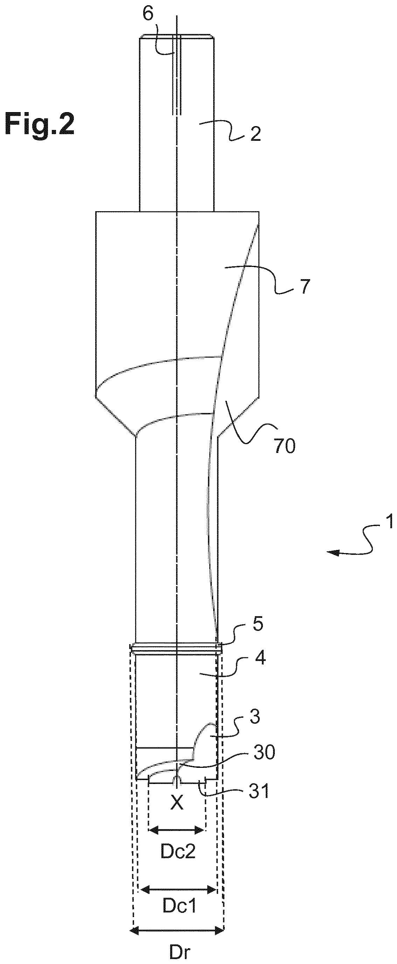

Plusieurs variantes de réalisation avantageuse de la fraise 1 selon l'invention sont montrées en figure 2.

Tout d'abord, la tête de coupe 3 comprenant deux étages dont un premier étage présentant le plus grand diamètre qui est le diamètre de perçage nominal Dcl, prolongé d'un deuxième étage de moindre diamètre de coupe Dc2 que le premier étage.

De préférence, chaque étage de coupe comprend un nombre de quatre dents 30, 31 agencées en hélice vers la droite autour de l'axe X ou droit, de préférence réparties uniformément à 90° les unes des autres ou avec une division inégale.

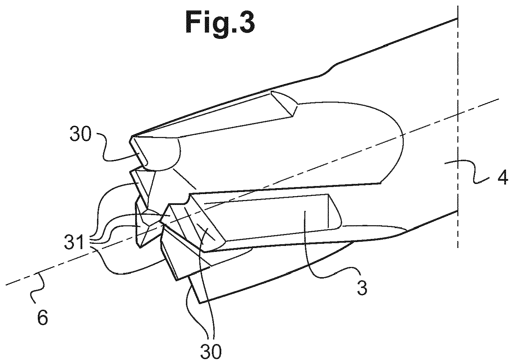

Comme mieux visible en figure 3, les hélices de l'étage de diamètre de perçage et de l'étage de moindre diamètre sont concentriques, avec des points de départ et d'arrivée alignés de manière par rapport à l'axe X, de sorte que les dents de coupe 30, 31 des deux étages sont coplanaires individuellement les unes avec les autres, parallèlement à l'axe X.

Une autre variante avantageuse consiste à munir la fraise, entre le renflement annulaire 5 et la queue 2, d'une partie de coupe arrière 7, élargie par rapport à la tête de coupe 3 et au renflement 5.

Cette partie de coupe arrière 7 permet ainsi de réaliser un perçage élargi par rapport à l'orifice percé au diamètre de perçage nominal, de sorte à loger une tête de rivet lorsque le perçage nominal est destiné à loger la tige d'un rivet.

A cet effet, cette partie arrière de coupe 7 peut comprendre un cône d'élargissement par rapport au diamètre de perçage nominal et des dents 70 agencées sur le cône en hélice autour de l'axe X ou droites, de préférence réparties uniformément ou avec une division inégale autour de l'axe X. Comme illustré en figure 2, les dents 70 peuvent être réalisées en partie sur la partie de jonction 4.

A titre d'exemple indicatif, pour réaliser un perçage orbital d'un orifice de diamètre de l'ordre de 6,35mm, les caractéristiques et dimensions de la fraise illustrée en figure 2 sont les suivantes :
- Diamètre de partie de jonction 4 : 4,76 mm ± 0,005 ;
- Diamètre nominal de perçage Dc1 : 4,844 mm;
- Diamètre de coupe avant Dc2: 3,2 mm ± 0,04 ;
- Dents 30, 31 de coupe : quatre dents hélicoïdales par étage avec hélice de 30° à droite ;
- Diamètre de la partie cylindrique 50 du renflement: 4,85 mm + 0,001-0,006;
- Rayon de courbure R1 et R2 des portions arrondies 51, 52 : 0,1mm ;
- Différence entre diamètre Dr du renflement 5 et diamètre de perçage nominal Dc1 : 3 microns ;
- Diamètre queue 2 : 4h7
- Diamètre partie élargie 7 : 10 mm
- Angle de cône de la partie élargie : 100° ± 0,5° ;
- Dents 70 de coupe : cinq dents hélicoïdales avec fausse hélice de 10° à droite.

La fraise 1 qui vient d'être décrite est particulièrement adaptée pourréaliser un perçage orbital d'un orifice dans des pièces destinées à constituer une partie d'une structure d'avion, notamment des profilés de cadres de fuselage d'avion.

De tels profilés peuvent être constitués par un empilement aluminium/ carbone/titane.

Avec le galetage de la fraise selon l'invention obtenu par le renflement annulaire 5, on peut obtenir un niveau d'écrouissage de l'aluminium tel que la résistance à la fatigue de la pièce est améliorée au niveau de l'orifice percé.

D'autres variantes et avantages de l'invention peuvent être réalisés sans pour autant sortir du cadre de l'invention.

Ainsi, si dans l'exemple illustré, la fraise est réalisée monobloc, les dents de coupe peuvent aussi bien être rapportées sur le corps de fraise par brasage ou être fixées par vissage.

L'invention n'est pas limitée aux exemples qui viennent d'être décrits ; on peut notamment combiner entre elles des caractéristiques des exemples illustrés au sein de variantes non illustrées.

## Revendications

1. Fraise (1) pour perçage orbital, constituée d'un corps de révolution autour d'un axe (X) comprenant une partie proximale formant une queue (2), une partie distale formant une tête de coupe (3) comprenant au moins un étage avec des dents de coupe définissant un diamètre de perçage (Dc), et une partie lisse de jonction (4) entre la queue et la tête de coupe, **caractérisée en ce que** la partie lisse de jonction comprend un renflement annulaire (5) de diamètre (Dr) supérieur au diamètre de perçage (Dc), de sorte à réaliser un galetage de l'orifice percé lors de l'avancée de la fraise.

2. Fraise (1) selon la revendication 1, le renflement annulaire (5) comprenant une portion cylindrique (50) définissant le diamètre de renflement (Dr), prolongée du côté de la tête de coupe (3) par un premier arc de raccordement (51) de rayon de courbure R1, et du côté de la queue (2) par un deuxième arc de raccordement (52) de rayon de courbure R2.

3. Fraise (1) selon la revendication 2, le rayon de courbure R1 étant égal au rayon de courbure R2.

4. Fraise (1) selon l'une des revendications précédentes, la différence entre le diamètre de perçage (Dc1) et le diamètre de renflement (Dr) étant comprise entre 1 et 12 µm.

5. Fraise (1) selon l'une des revendications précédentes, la tête de coupe comprenant deux étages dont un premier étage présentant le plus grand diamètre qui est le diamètre de perçage nominal (Dc1), prolongé d'un deuxième étage de moindre diamètre de coupe (Dc2) que le premier étage.

6. Fraise (1) selon la revendication 5, la différence entre le diamètre de perçage nominal (Dc1) et le moindre diamètre de coupe (Dc2) étant comprise entre 1 et 6 mm.

7. Fraise (1) selon la revendication 5 ou 6, chaque étage de coupe comprenant un nombre de quatre dents (30, 31) agencées en hélice autour de l'axe X ou droites, de préférence réparties uniformément à 90° les unes des autres.

8. Fraise (1) selon la revendication 7, l'hélice étant une hélice vers la droite, d'angle compris entre -20 et 45°.

9. Fraise selon la revendication 7 ou 8, les hélices de l'étage de diamètre de perçage et de l'étage de moindre diamètre étant concentriques, avec des points de départ et d'arrivée alignés de manière par rapport à l'axe X, de sorte que les dents de coupe (30, 31)
des deux étages sont coplanaires individuellement les unes avec les autres, parallèlement à l'axe X.

10. Fraise selon l'une des revendications précédentes, comprenant un trou central (6) traversant de part en part la fraise, le trou (6) étant destiné à alimenter en liquide ou en gaz de lubrification la tête de coupe depuis la queue.

11. Fraise selon l'une des revendications précédentes, comprenant entre le renflement annulaire (5) et la queue (2), une partie de coupe arrière (7), élargie par rapport à la tête de coupe (3) et au renflement (5), la partie de coupe arrière (7) étant adaptée pour réaliser un perçage élargi par rapport à l'orifice percé au diamètre de perçage nominale de sorte à loger une tête de rivet lorsque le perçage nominal est destiné à loger la tige d'un rivet.

12. Fraise selon la revendication 11, la partie arrière de coupe (7) comprenant un cône d'élargissement par rapport au diamètre de perçage nominal et des dents (70) agencées sur le cône en hélice autour de l'axe X ou droites, de préférence réparties uniformément autour de l'axe X, les dents (70) étant de préférence réalisées en partie sur la partie de jonction (4).

13. Fraise selon l'une des revendications précédentes, le diamètre de perçage nominal (Dc, Dc1) est compris entre 2 et 30 mm.

14. Utilisation de la fraise (1) selon l'une quelconque des revendications précédentes pour réaliser un perçage orbital d'un orifice, la rotation de la fraise sur son axe de révolution (X) étant de préférence comprise entre 50000 et 60000 tr/min tandis que la rotation de la fraise autour de l'axe orbital est comprise entre 200 et 2000 tr/min.

15. Utilisation de la fraise selon la revendication 14, pour le perçage orbital de pièces destinées à constituer une partie d'une structure d'avion, notamment des profilés de cadres de fuselage d'avion, les pièces à percer étant de préférence en partie en aluminium, typiquement dans un empilement aluminium/carbone/titane.

## Patentansprüche

1. Fräser (1) zum Orbitalbohren, welcher aus einem Rotationskörper bezüglich einer Achse (X) besteht, der einen proximalen Teil, der einen Schaft (2) bildet, einen distalen Teil, der einen Schneidkopf (3) bildet, der wenigstens eine Stufe mit einen Bohrdurchmesser (Dc) definierenden Schneidzähnen umfasst, und einen glatten Verbindungsteil (4) zwischen dem Schaft und dem Schneidkopf umfasst, **dadurch gekennzeichnet, dass** der glatte Verbindungsteil eine ringförmige Verdickung (5) mit einem Durchmesser (Dr), der größer als der Bohrdurchmesser (Dc) ist, umfasst, um ein Glattwalzen der gebohrten Öffnung beim Vorschub des Fräsers durchzuführen.

2. Fräser (1) nach Anspruch 1, wobei die ringförmige Verdickung (5) einen den Verdickungsdurchmesser (Dr) definierenden zylindrischen Abschnitt (50) umfasst, der auf der Seite des Schneidkopfes (3) durch einen ersten Anschlussbogen (51) mit einem Krümmungsradius R1 und auf der Seite des Schaftes (2) durch einen zweiten Anschlussbogen (52) mit einem Krümmungsradius R2 verlängert ist.

3. Fräser (1) nach Anspruch 2, wobei der Krümmungsradius R1 gleich dem Krümmungsradius R2 ist.

4. Fräser (1) nach einem der vorhergehenden Ansprüche, wobei die Differenz zwischen dem Bohrdurchmesser (Dc1) und dem Verdickungsdurchmesser (Dr) 1 bis 12 µm beträgt.

5. Fräser (1) nach einem der vorhergehenden Ansprüche, wobei der Schneidkopf zwei Stufen umfasst, von denen eine erste Stufe den größten Durchmesser aufweist, welcher der Nenn-Bohrdurchmesser (Dc1) ist, und durch eine zweite Stufe verlängert ist, die einen kleineren Schneiddurchmesser (Dc2) als die erste Stufe hat.

6. Fräser (1) nach Anspruch 5, wobei die Differenz zwischen dem Nenn-Bohrdurchmesser (Dc1) und dem kleineren Schneiddurchmesser (Dc2) 1 bis 6 mm beträgt.

7. Fräser (1) nach Anspruch 5 oder 6, wobei jede Schneidstufe vier Zähne (30, 31) umfasst, die schraubenlinienförmig um die Achse X herum angeordnet oder gerade sind und vorzugsweise gleichmäßig im Abstand von 90° voneinander verteilt sind.

8. Fräser (1) nach Anspruch 7, wobei die Schraubenlinie eine nach rechts verlaufende Schraubenlinie mit einem Winkel zwischen -20 und 45° ist.

9. Fräser nach Anspruch 7 oder 8, wobei die Schraubenlinien der Stufe mit dem Bohrdurchmesser und der Stufe mit dem kleineren Durchmesser konzentrisch sind, mit Anfangs- und Endpunkten, die in Bezug auf die Achse X so ausgerichtet sind, dass die Schneidezähne (30, 31) der zwei Stufen jeweils einzeln zueinander koplanar sind, parallel zur Achse X.

10. Fräser nach einem der vorhergehenden Ansprüche, welcher ein zentrales Loch (6) umfasst, das den Fräser vollständig durchquert, wobei das Loch (6) dazu bestimmt ist, den Schneidkopf vom Schaft aus mit Schmierflüssigkeit oder mit Schmiergas zu versorgen.

11. Fräser nach einem der vorhergehenden Ansprüche, welcher zwischen der ringförmigen Verdickung (5) und dem Schaft (2) einen hinteren Schneidteil (7) umfasst, der in Bezug auf den Schneidkopf (3) und die Verdickung (5) verbreitert ist, wobei der hintere Schneidteil (7) dafür ausgelegt ist, eine in Bezug auf die mit dem Nenn-Bohrdurchmesser gebohrte Öffnung erweiterte Bohrung herzustellen, um einen Nietkopf aufzunehmen, wenn die Nennbohrung dazu bestimmt ist, den Schaft eines Niets aufzunehmen.

12. Fräser nach Anspruch 11, wobei der hintere Schneidteil (7) einen Kegel zur Erweiterung bezüglich des Nenn-Bohrdurchmessers und Zähne (70), die auf dem Kegel schraubenlinienförmig um die Achse X herum angeordnet oder gerade sind und vorzugsweise gleichmäßig um die Achse X herum verteilt sind, umfasst, wobei die Zähne (70) vorzugsweise teilweise auf dem Verbindungsteil (4) hergestellt sind.

13. Fräser nach einem der vorhergehenden Ansprüche, wobei der Nenn-Bohrdurchmesser (Dc, Dc1) zwischen 2 und 30 mm liegt.

14. Verwendung des Fräsers (1) nach einem der vorhergehenden Ansprüche zur Durchführung eines Orbitalbohrens einer Öffnung, wobei die Drehzahl des Fräsers um seine Drehachse (X) vorzugsweise zwischen 50000 und 60000 U/min liegt, während die Drehzahl des Fräsers um die Orbitalachse zwischen 200 und 2000 U/min liegt.

15. Verwendung des Fräsers nach Anspruch 14 zum Orbitalbohren von Teilen, die dazu bestimmt sind, einen Teil einer Flugzeugstruktur zu bilden, insbesondere der Profilteile von Rumpfrahmen eines Flugzeugs, wobei die zu bohrenden Teile vorzugsweise teilweise aus Aluminium bestehen, typischerweise in einem Stapel Aluminium/Kohlenstoff/Titan.

## Claims

1. Milling tool (1) for orbital drilling, composed of a body of revolution about an axis (X) comprising a proximal part forming a tail (2), a distal part forming a cutting head (3) comprising at least one level with cutting teeth defining a drilling diameter (Dc), and a smooth joining part (4) between the tail and the cutting head, **characterized in that** the smooth joining part comprises an annular bulge (5) of diameter (Dr) greater than the drilling diameter (Dc), so as to produce a burnishing of the orifice drilled as the milling tool advances.

2. Milling tool (1) according to Claim 1, the annular bulge (5) comprising a cylindrical portion (50) defining the bulge diameter (Dr), extended on the side of the cutting head (3) by a first connecting arch (51) of radius of curvature R1, and on the side of the tail (2) by a second connecting arch (52) of radius of curvature R2.

3. Milling tool (1) according to Claim 2, the radius of curvature R1 being equal to the radius of curvature R2.

4. Milling tool (1) according to one of the preceding claims, the difference between the drilling diameter (Dc1) and the bulge diameter (Dr) lying between 1 and 12 µm.

5. Milling tool (1) according to one of the preceding claims, the cutting head comprising two levels, including a first level having the greater diameter which is the nominal drilling diameter (Dc1), extended by a second level of lesser cutting diameter (Dc2) than the first level.

6. Milling tool (1) according to Claim 5, the difference between the nominal drilling diameter (Dc1) and the lesser cutting diameter (Dc2) lying between 1 and 6 mm.

7. Milling tool (1) according to Claim 5 or 6, each cutting level comprising a number of four teeth (30, 31) arranged in a helix about the axis X or straight, preferably distributed uniformly at 90° from one another.

8. Milling tool (1) according to Claim 7, the helix being a right-handed helix, of angle between -20 and 45°.

9. Milling tool according to Claim 7 or 8, the helices of the level of drilling diameter and of the level of lesser diameter being concentric, with departure and arrival points aligned relative to the axis X, such that the cutting teeth (30, 31) of the two levels are individually coplanar with one another, parallel to the axis X.

10. Milling tool according to one of the preceding claims, comprising a central hole (6) passing right through the milling tool, the hole (6) being intended to supply lubricant liquid or gas to the cutting head from the tail.

11. Milling tool according to one of the preceding claims, comprising, between the annular bulge (5) and the tail (2), a rear cutting part (7), wider than the cutting head (3) and the bulge (5), the rear cutting part (7) being designed to produce a widened drill-hole relative to the orifice drilled with the nominal drilling diameter so as to house a rivet head when the nominal drill-hole is intended to house the stem of a rivet.

12. Milling tool according to Claim 11, the rear cutting part (7) comprising a widening cone relative to the nominal drilling diameter and teeth (70) arranged on the cone helically about the axis X or straight, preferably distributed uniformly about the axis X, the teeth (70) being preferably produced partly on the joining part (4).

13. Milling tool according to one of the preceding claims, the nominal drilling diameter (Dc, Dc1) lying between 2 and 30 mm.

14. Use of the milling tool (1) according to any one of the preceding claims to perform an orbital drilling of an orifice, the rotation of the milling tool on its axis of revolution (X) preferably lying between 50,000 and 60,000 rpm while the rotation of the milling tool about the orbital axis lies between 200 and 2000 rpm.

15. Use of the milling tool according to Claim 14, for the orbital drilling of parts intended to constitute a part of an aeroplane structure, in particular extruded sections of aeroplane fuselage frames, the parts to be drilled being preferably partly made of aluminium, typically in an aluminium/carbon/titanium stack.
